# EUROPEAN PATENT APPLICATION

(11) **EP 1 566 707 A2**
(43) Date of publication of application: **24.08.2005**
(21) Application number: 05250888.4
(22) Date of filing: 16.02.2005
(51) Int. Cl.: G03H 1/02, B41M 3/14, G09F 3/10

(54) **Method of attaching hologram films to printed matter**

(30) Priority: 18.02.2004 US 782387
(71) Applicant: Amagic Holographics, Inc., California 92606 (US)
(72) Inventor: Rivera, Michael J., Perkiomenville Pennsylvania 18074 (US); Kuo, Alex, Irvine California 92606 (US)
(74) Representative: Kazi, Ilya

(57) **Abstract**

A label comprising a substrate (101), a layer of UV curable ink (102) and a transparent layer of film (103), which has holographic images embossed on it. Patterns are printed on the substrate using a UV curable ink in its uncured state. When a hologram film is laminated to the substrate containing the UV curable inked pattern and exposed to UV light, the portion of the hologram film in contact with the UV curable ink adheres to the substrate as part of the curing process. The remaining part of the holographic film is peeled off from the substrate.

## Description

### BACKGROUND OF THE INVENTION

The present invention relates to attaching hologram films to printed matter, in particular methods of manufacturing, such as, for example, a security label with an ink pattern and a hologram.

Currently labels containing hard to duplicate features are used to provide security for product authentication to protect against counterfeiting of products. Some of the features include holographic patterns and images or patterns printed using inks with special characteristics. Some of these security labels have multiple layers, making them more difficult to duplicate, but also requiring more process steps. Not only are the additional layers required, and adhesive between the layers is often required.

For example, in U.S. Pat. 6,120,882 the security label contains a retro-reflective layer below a holographic film. In U.S. Pat. 5,857,709 the security label contains a holographic film and a layer of electrically conducting film. In U.S. Pat. 6,616,190 the security label contains a photo chromic layer on top of the holographic film. U.S. Pat. 6,443,494 shows a optical security coating that can be scratched off to reveal the underlying information.

### BRIEF SUMMARY OF THE INVENTION

The apparatus according to an embodiment of the present invention contains a substrate, a layer of UV curable ink and a transparent layer of film, which has holographic images embossed on it. Patterns are printed on the substrate using a UV curable ink in its uncured state. When a hologram film is laminated to the substrate containing the UV curable inked pattern and exposed to UV light, the portion of the hologram film in contact with the UV curable ink adheres to the substrate as part of the curing process. The remaining part of the holographic film is peeled off from the substrate. By using the UV curable ink to adhere the holographic film, the step of an intervening adhesive layer is avoided, and precise alignment of the hologram and the printed pattern is achieved. The apparatus is a hologram film over printed matter, which can be a security label, a Christmas card, a package, a book cover, or any other application.

In a second embodiment of the present invention, ink patterns are printed on a substrate. A thin layer of transparent UV curable adhesive is later printed on top of the inked pattern. The hologram film is then laminated to the adhesive, which is then cured to cause the hologram film to adhere. The portion of the hologram film in contact with the UV adhesive will stay with the substrate while the remaining parts of the holographic film will be peeled away from the substrate. The ink used in the pattern may have one or more of these properties: thermo chromic, photo chromic, fluorescent, black light fluorescent, phosphorescent, bi-chromic, IR detectable, Photo luminescent, low cohesion (scratch-off), etc.

### BRIEF DESCRIPTION OF THE DRAWINGS

Figure 1(a) is a side view of the layer structure in a first embodiment of the invention.
Figure 1 (b) is a top view of the layer structure in Figure1.
Figures 2(a)-(c) illustrate the process steps for creating the embodiment of Figure 1.
Figure 3(a) is a side view of the layer structure of a second embodiment of the invention.
I Figure 3(b) is a top view of the structure of Figure 3(a).
Figures 4(a)-(d) illustrate the process steps for creating the embodiment of Figure 3(a).

### DETAILED DESCRIPTION OF THE INVENTION

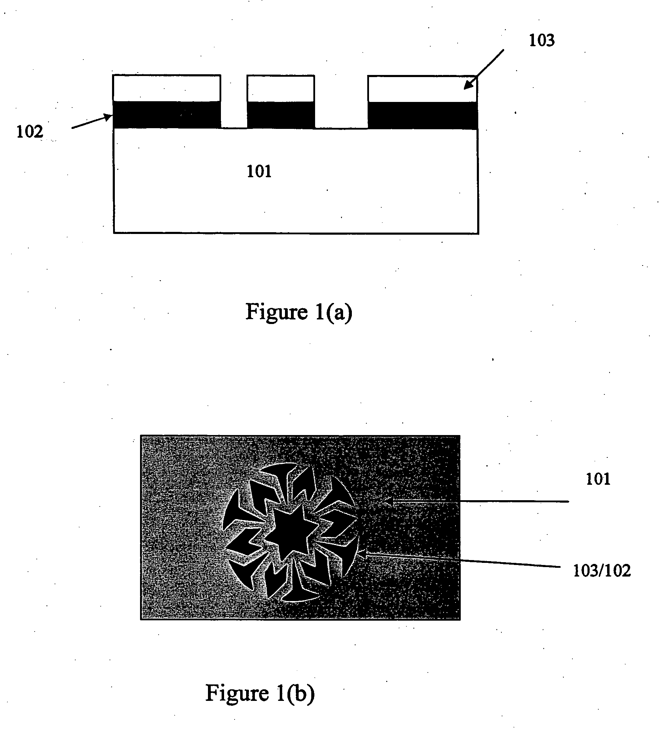

Figure 1. shows the side-view of a security label constructed according to a first embodiment of the present invention. Layer 101 is the substrate. Layer 102 is the UV curable ink with the special optical effects and layer 103 is the holographic film. As can be seen, the holographic film only adheres to the UV curable ink after curing by UV light.

Figure 1(b) shows the top view of the security label of Figure 1(a). Visually, one can only see a holographic film with an inked background. When the security label is exposed to a certain wavelength of light, the fluorescent ink will make the holographic film glow in the dark. Different kinds of ink such as photo chromic or thermo chromic will produce different effects for the hologram when different light or heat conditions are applied. The addition of a special ink layer to the holographic film increases the technical barrier for counterfeiting the security label for product identification.

The UV-curable ink used could also have the following properties:
1) thermo chromic (changes color when the temperature changes)
2) photo chromic (changes color when exposed to UV light)
3) fluorescent (highly reflective ink)
4) phosphorescent (glow in the dark)
5) black light fluorescent (glows when exposed to black light, not the same as standard fluorescent)
6) scratch-off (ink can easily be scratched off similar to lottery tickets)
7) bi-chromic (color shifting inks similar to the new $20 dollar bill, color changes when viewing angle is changed)
8) IR detectable inks (the ink is originally invisible and only becomes visible when exposed to an IR light)
9) Photo luminescent

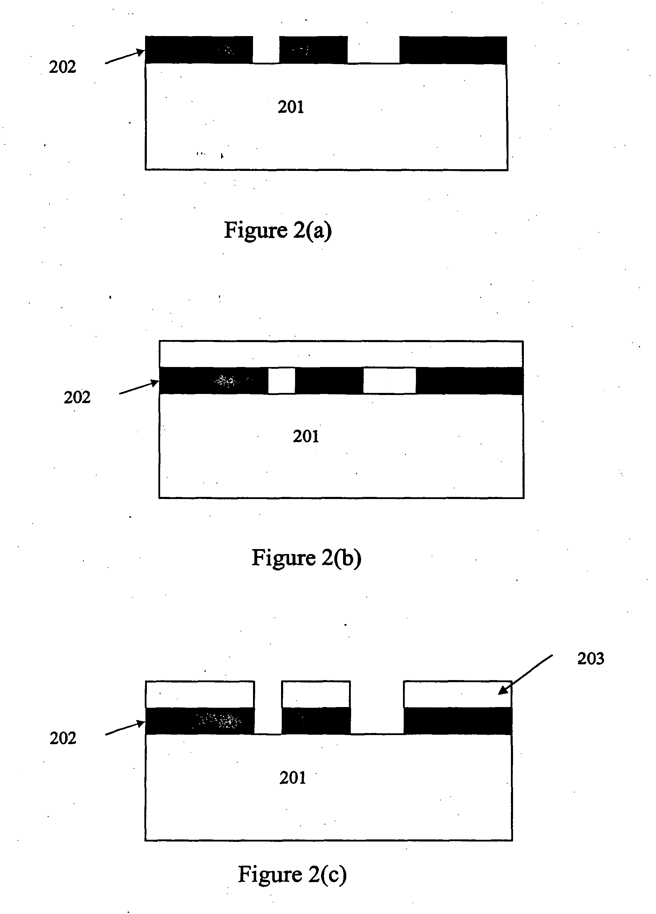

Figures 2(a)-(c) show the three steps in the construction of the layer structure of Figure 1(a). As shown in Figure 2(a), a pattern 202 is first printed on substrate 201 using a UV curable ink. Figure 2(b) shows a holographic film 203 being laminated on top of the inked pattern. After the composite film has been exposed to UV light, the holographic film is peeled away from the substrate in areas other than where it adheres to the UV curable ink. The layer structure which remains is shown in Figure 2(c).

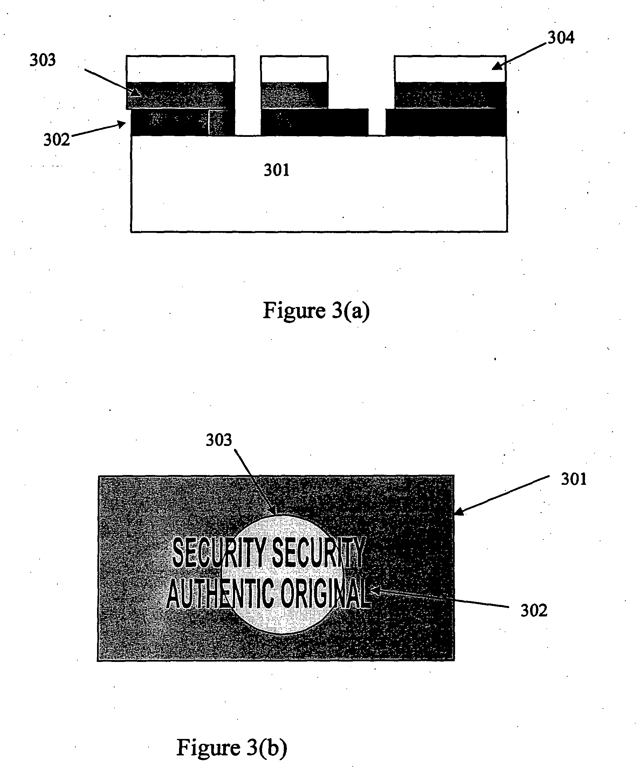

Figure 3(a) shows the layer structure of a security label made according the second embodiment of the present invention. In this embodiment the inked pattern 302 on the substrate as shown has been cured by UV exposure. Hence, it is hard and has no adhesive properties. A second transparent UV curable adhesive 303 is patterned on top of the ink pattern. The pattern of this layer is generally independent of the first layer. The adhesive layer can be on top of the inked area or the non-inked area. The holographic film 304 is laminated to the substrate only in the area with the transparent adhesive. In Figure 3(b) the transparent adhesive area 303 has a circular shape. As a result, a holographic film 304 with a circular shape is laminated to the substrate 301. The holographic film covers only partially the inked pattern 302.

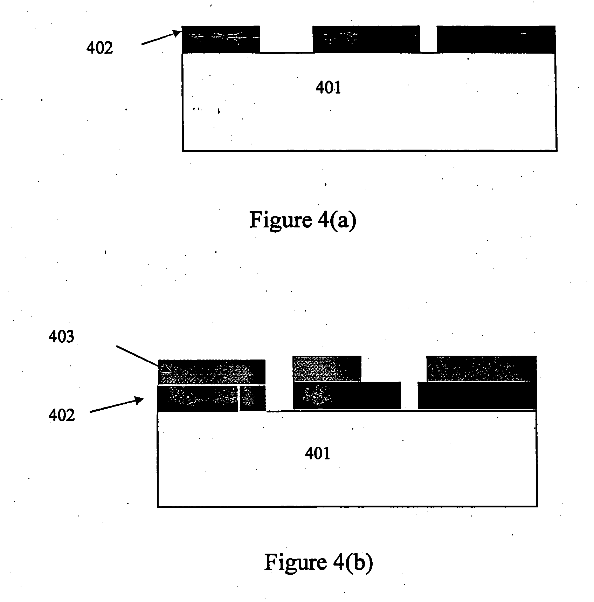

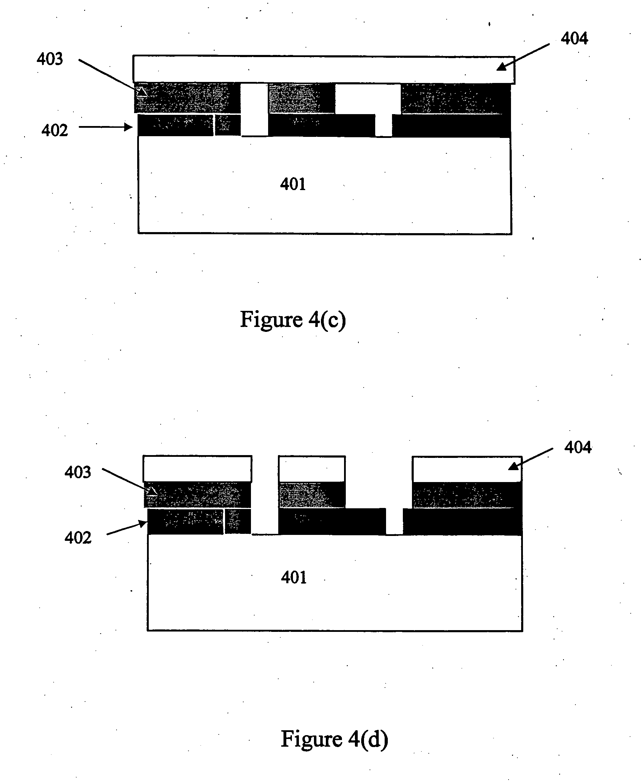

Figure 4 shows the process for the fabrication of this layer structure of Figure 3(a). In Figure 4(a) a pattern 402 is first printed on substrate 401 using a UV curable ink. The inked pattern is subsequently hardened by UV exposure. Figure 4(b) shows a transparent adhesive layer 403 being printed on top of the inked pattern. A holographic film 404 is laminated on top of the adhesive layer 403 as shown in Figure 4(c). After the composite film has been exposed to UV light, the holographic film 404 is peeled away from the substrate. The remaining layer structure is shown in Figure 4(d).

The use of the ink pattern itself to adhere to the holographic film insures alignment, since the film will only stick to the pattern. The non-sticking portions of the holographic film can be mechanically grasped and peeled away. The process thus can be automated, using printing and machine peeling operations.

As will be understood by those of skill in the art, the present invention may be embodied in other specific forms without departing from the essential characteristics thereof. For example, the non-sticking portion of the holographic film could be removed by other means, such as using a solvent. Accordingly, the foregoing description is intended to be illustrative, but not limiting, of the scope of the invention which is set forth in the following claims.

## Claims

1. A method of attaching a hologram film to printed matter, comprising:
printing a pattern on a substrate with UV curable ink;
placing a holographic film over said pattern; and
curing said UV curable ink with UV light;
wherein said curing causes said holographic film to stick to said pattern.

2. The method of claim 1 wherein the UV curable ink has fluorescent properties.

3. The method of claim 1 wherein the UV curable ink has photo chromic properties.

4. The method of claim 1 wherein the UV curable ink has thermo chromic properties.

5. The method of claim 1 wherein the UV curable ink has bi-chromic properties.

6. The method of claim 1 wherein the UV curable ink is a scratch-off ink.

7. A method of attaching a hologram film to printed matter comprising:
printing a pattern on a substrate with ink;
placing a transparent UV curable adhesive layer over said pattern:
placing a holographic film over said adhesive layer; and
curing said UV curable adhesive layer with UV light;
wherein said curing causes said holographic film to stick to said adhesive layer.

8. The method of claim 7 wherein the ink is UV curable ink.

9. The method of claim 8 wherein the UV curable ink has fluorescent properties.

10. The method of claim 8 wherein the UV curable ink has photo chromic properties.

11. The method of claim 8 wherein the UV curable ink has thermo chromic properties.

12. The method of claim 8 wherein the UV curable ink has bi-chromic properties.

13. The method of claim 8 wherein the UV curable ink has low adhesion properties.

14. A security label comprising:
a substrate;
a pattern of UV cured ink on said substrate; and
a holographic film over said pattern, adhering to the cured ink of said pattern.

15. The security label of claim 14 wherein said UV cured ink has fluorescent properties.

16. The security label of claim 14 wherein said UV cured ink has photo chromic properties.

17. The security label of claim 14 wherein said UV cured ink has thermo chromic properties.

18. The security label of claim 14 wherein said UV cured ink has bi-chromic properties.

19. The security label of claim 14 wherein said UV cured ink has low adhesion properties.

20. A security label comprising:
a substrate;
an ink pattern printed on said substrate;
a transparent UV cured adhesive layer over said pattern;
a holographic film over said adhesive layer, said film adhering to said adhesive layer.

21. The security label of claim 20 wherein said ink has fluorescent properties.

22. The security label of claim 20 wherein said ink has photo chromic properties.

23. The security label of claim 20 wherein said ink has thermo chromic properties.

24. The security label of claim 20 wherein said ink has bi-chromic properties.
